# EUROPEAN PATENT SPECIFICATION

(11) **EP 1 899 987 B1**
(45) Date of publication and mention of the grant of the patent: **22.04.2015**
(21) Application number: 06739714.1
(22) Date of filing: 23.03.2006
(51) Int. Cl.: H01B 13/24, H01B 13/14

(54) **ELECTRICAL CABLE HAVING A SURFACE WITH REDUCED COEFFICIENT OF FRICTION**
ELEKTRISCHES KABEL MIT EINER OBERFLÄCHE MIT VERRINGERTEM REIBUNGSKOEFFIZIENTEN
CABLE ELECTRIQUE PRESENTANT UNE SURFACE A COEFFICIENT DE FROTTEMENT REDUIT

(30) Priority: 24.05.2005 US 135986
(43) Date of publication of application: 19.03.2008
(73) Proprietor: Southwire Company, LLC, Carrollton, GA 30119-4400 (US)
(72) Inventor: KUMMER, Randy D., Villa Rica, GA 30180 (US); REECE, David, Carrollton, GA 30117 (US); DIXON, Mark D., Carrollton, GA 30117 (US); CARLSON, John R., Newnan, GA 30264 (US); LAM, Hai, Douglasville, GA 30135 (US); SASSE, Philip, Douglasville, GA 30153 (US)
(74) Representative: Fletcher, Matthew James Edwin
(86) International application number: PCT/US2006/011069
(87) International publication number: WO 2007/081372

(56) References cited:
- EP-A- 0 364 717
- WO-A-2006/016896
- JP-A- 1 110 013
- JP-A- 1 307 110
- JP-A- 5 266 720
- JP-A- 6 057 145
- JP-A- H01 144 504
- US-A- 3 852 875
- US-A- 3 852 875
- US-A- 4 100 245
- US-A- 4 356 139
- US-A- 5 036 121
- US-A- 5 753 861
- US-A- 5 912 436
- US-A- 5 912 436
- US-A- 6 159 617
- US-A1- 2002 010 252
- US-A1- 2002 043 391
- US-A1- 2002 043 391
- US-A1- 2003 195 279
- US-A1- 2004 001 682
- US-A1- 2004 254 299
- US-B2- 6 977 280

## Description

### TECHNICAL FIELD

The present invention relates to an electrical cable and to a method of and equipment for reducing its coefficient of friction.

### BACKGROUND ART

Electrical cables which include at least one conductor core and at least one coating are well known.

Such cables present the disadvantage that their exterior surface has a high coefficient of friction, so that they are awkward to fit in internal sections of walls and ceilings or conduits, since when they come into contact with the surfaces they become stuck or difficult to pull, etc.

In order to overcome said difficulty, alternative materials such as vaselines and the like have been used to coat the exterior surface of the cable, thereby reducing the coefficient of friction.

In patent literature PL1 the use of a cable for motor winding processes is disclosed (examples 1 to 9). Said cable comprises - a cable core and- an insulation layer comprising a lubricant (silicone oil) and a resin (imid ester (example 1), polyester (examples 2) or nylon).The present application differs from this known use in that a cable is used in the installation through wall cavities, conduits or ducts. A cable suitable for motor winding processes is too fragile for such use.

In patent literature PL2 a cable is disclosed (claim 1), comprising a cable core, an insulation jacket made of a vulcanised insulation shield and a lubricant. No use is disclosed of a cable comprising an additional outer jacket comprising a lubricant. Without the outer jacket such a cable is not suitable for the use in the installation through wall cavities, conduits or ducts.
PL1: JP 1 144504 A (FUJIKURA LTD) 6 June 1989 (1989-06-06)
PL2: US 4 356 139 A (ROWLAND BOBBY A ET AL) 26 October 1982 (1982-10-26)

In a complementary manner, guides of small diameter are sometimes used, one end of which is inserted through the cavity through which the cable has to pass and the other is attached to the end of the cable which must be inserted into the cavity. Thus, once the guide has emerged at the desired place it is pulled until the end of the cable appears again after having passed through the entire section.

In numerous fields of application, and in particular telecommunications, electric or fiber optic cables are inserted into ducts. There is therefore a need to minimize the coefficient of friction between cables and the inside walls of ducts.

In one solution, the core of the cable passes via a first extruder which applies a conventional sheath thereto i.e., a jacket and/or insulation, often made of polyethylene. The sheathed core then passes through a second extruder which applies a lubricant layer thereto, such as an alloy of silicone resin and polyethylene. The cable lubricated in that way then passes in conventional manner through a cooling vessel.

A second solution provides for an extruder to cover the core of a cable with a sheath. At the outlet from that extruder there is disposed a coating chamber for applying granules of material to the still-hot sheath, which granules are designed to become detached when the cable is inserted in a duct. Finally, the coated cable passes through a cooling vessel.

In both of these two prior solutions, it is necessary to interpose additional equipment between the extruder and the cooling vessel. That gives rise to a major alteration of the manufacturing line.

In addition, the equipment for depositing the lubricant must be very close to the sheath extrusion head since otherwise it is not possible to control the thickness of the sheath properly. In any event, the additional equipment occupies non-negligible space and such an arrangement is not favorable for control over the dimensions of the sheath.

Whatever the prior art method used, the manufacture and/or installation of said cables involves a considerable loss of time and an economic cost, since alternative materials are required.

### OBJECTS AND SUMMARY OF THE INVENTION

The present invention provides the use of an electrical cable (12) having a cable core (14) and an external jacket with an exterior surface defining the outermost exterior surface of the cable (12) wherein the external jacket of the cable (12) is formed of extruded plastic material (17) characterized in that:
the electrical cable (12) is utilised in installation through wall or ceiling cavities conduits or ducts;
the cable core (14) is comprised of an electrical conductor;
the jacket incorporates lubricating material (19) that blooms, migrates toward the exterior surface of or permeates the jacket, the lubricating material being incorporated into the sheath during or prior to the extruding; and
the jacket contains sufficient lubricating material (19) to provide a reduced coefficient of friction of the exterior surface of said external jacket sufficient to reduce an amount of force required to pull the cable (12) through said wall or ceiling cavities conduits or ducts during its installation.

### DISCLOSURE OF THE INVENTION

With the method and cable of the invention said disadvantages can be solved, while providing other advantages which will be described below.

The method for the manufacture of electrical cables is characterized in that it includes a step in which a lubricating material is mixed with the sheath material and this mixture is applied to the core of the cable.

A cable with low coefficient of friction is achieved thereby, so that subsequent installation of the same is considerably simplified, since it slides over the surfaces with which it comes into contact.

The step of mixing the lubricating material and the sheath material may be carried out with the lubricating material heated or not and the sheath material heated or not.

The sheath material normally is introduced in pellet form to an extruder which heats and directs the sheath material onto the cable or conductor core. The present invention includes the embodiment of incorporating the lubricating material into the sheath pellets during the formation of the sheath pellets and introducing this mixture of sheath pellets and lubricant material into an extruder, the embodiment of mixing the lubricant material with the sheath pellets and the embodiment of introducing this mixture into the extruder, and introducing the sheath pellets into the extruder and subsequently introducing the lubricating material into the extruder prior to contacting the cable core.

Advantageously, the lubricant material is selected from the group consisting essentially of fatty amides, hydrocarbon oils, fluorinated organic resins, and mixtures thereof. The lubricant material may be incorporated at any point in the manufacturing process before the formation of the sheath, and depending upon the material, may be heated prior to mixing with the sheath material.

In instances where the sheath material has a high melting or softening temperature, or for other reasons such as processibility, efficiency of the process, etc. the lubricant material may be added to the sheath material as the sheath material is being formed. If the final cable construction is such that there are two or more different sheath materials applied to the cable core, the lubricant material need only be incorporated into the outermost sheath material.

Advantageously, the lubricating materials include fatty amides, fatty acids, fatty esters and metallic fatty acids and more advantageously include fatty amides, fatty acids, fatty esters, and metallic fatty acids having from about 10 to about 28 carbon atoms preferably from about 10 to about 2 carbon atoms and include, but are not limited to erucamide, oleamide, oleyl palmitamide, stearyl stearamide, stearamide, behenamide, ethylene bisstearamide, ethylene bisoleamide, stearyl erucamide, erucyl stearamide, capric acid, lauric acid, myristic acid, palmitic acid, palmitoleic acid, stearic acid, oleic acid, vaccenic acid, linoleic acid, linolenic acid, eleostearic acid, arachidic acid, arachidonic acid, behenic acid, lignoceric acid, nervonic acid, cerotic acid, montanic acid, caprate, laurate, myristate, palmitate, palmitoleate, stearate, oleate, vaccinate, linoleate, linolenate, eleostearate, arachidate, arachidonate, behenate, lignocerate, nervonate, cerotate, montanate, pentaerythritol monopalmitate, pentaerythritol monostearate, pentaerythritol dipalmitate, pentaerythritol palmitate stearate, pentaerythritol distearate, and the like. Advantageous hydrocarbon oils include, but are not limited to, mineral oil, silicone oil, and the like. Lubricating materials suitable for the present invention further include plasticizers, dibasic esters, silicones, anti-static amines, organic amines, ethanolamides, mono-and di-glyceride fatty amines, ethoxylated fatty amines, fatty acids, zinc stearate, stearic acids, palmitic acids, calcium stearate, lead stearate, sulfates such as zinc sulfate, etc., and the like. The above lubricating materials may be used individually or in combination.

The electrical cable is characterized in that it incorporates a lubricating material in the sheath coating, which lubricating material blooms, migrates toward the exterior, or permeates the cable sheath. If desired the sheath material may be somewhat porous, thereby resulting in the lubricating material more readily migrating toward the exterior surface of the sheath.

The sheath of the cable thus contains sufficient lubricating material to provide an exterior surface with reduced coefficient of friction.

The equipment for the manufacturing of electrical cables is characterized in that it may include a device for the incorporation of a lubricating material into the sheath material prior to application to the cable core.

Said equipment may also include a tank to maintain the lubricating material, a section for mixing the lubricating material and sheath material and a section for applying the mixture to the cable core.

Moreover, the equipment may also include a pressure adjusting valve(s), a level indicator(s) of the lubricating material tank and sheath material tanks, and a pressure gauge(s).

### BRIEF DESCRIPTION OF THE DRAWINGS

For a better understanding of the present invention, a drawing is attached in which, schematically and by way of example, an embodiment is shown.

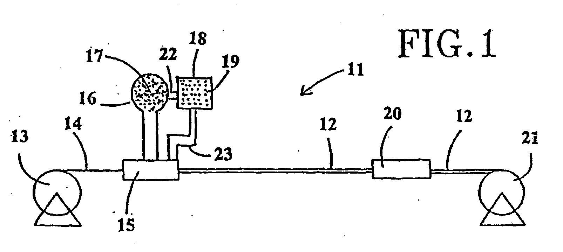

FIG. 1 is a schematic elevation view of equipment for manufacturing electrical cable, according to the method of the present invention.

### BEST MODE FOR CARRYING OUT THE INVENTION

As can be appreciated in the figure, the equipment 11 for manufacturing electrical cable 12 of the present invention includes a reel 13 which supplies conductor wire 14 to an extruding head 15, which in turn includes a tank 16 of plastic material 17; a tank 18 of lubricating material 19 for mixture with plastic material 17 and for application onto the exterior surface of the conductor wire 14; a cooling box 20 for cooling the exterior surface of the plastic material 17 - lubricating material 19 mixture which is in a state of fusion or semi-fusion on the conductor wire or cable core 14; and a reel 21 for taking up the resulting cable 12.

As can also be seen in the figures, the tank 18 may include a section 22 through which the lubricating material can pass into tank 16 and be mixed with plastic material 17 and a section 23 through which lubricating material 19 can be introduced directly into extruding head 15 at a point after plastic material 17 has been introduced into extruding head 15.

Plastic material 17 includes known materials used in electrical wire and cable products such as polyethylene, polypropylene, polyvinylchloride, organic polymeric thermosetting and thermoplastic resins and elastomers, polyolefins, copolymers, vinyls, olefin-vinyl copolymers, polyamides, acrylics, polyesters, fluorocarbons, and the like.

The present inventive method and the novel cable produced thereby includes the step of coating conductor wire or cable core 14 with the mixture of plastic material 17 and lubricating material 19 and optionally cooling the coated cable formed thereby.

Cable 12 is thus obtained with at least one conducting core and an exterior coating, the main characteristic of which is that its coefficient of friction is low, which makes it easier to install since it slips on the surfaces with which it comes into contact.

Another beneficial property gained by the present invention is an increased resistance to "burn-through." "Burn-through," or "pull-by," results from friction generated by pulling one cable over another during installation, causing deterioration and eventual destruction to its own jacket as well as the jacket of the other cable. When using a lubricated cable of this invention the number of six-inch-stroke cycles required to produce burn-through was increased from 100 to 300.

The present inventive cable may also enhance ease in stripping the jacket from the cable end - termed stripability.

A further benefit of the present invention is the reduction of jacket rippling. Jacket rippling results from the friction of the jacket against building materials, causing the jacket material to stretch and bunch. Jacket damage may result. Installation situations, which repeatedly caused jacket rippling in unlubricated cable caused no rippling in lubricated cable jackets.

Despite the fact that reference has been made to specific embodiments of the invention, it will be clear to experts in the subject that the cable, the method and the equipment described can be varied and modified in many ways, and that all the details mentioned can be replaced by others which are technically equivalent without departing from the sphere of protection defined by the attached claims.

For example, cable 12 on which plastic material 17 and lubricating material 19 are applied can be of any desired configuration and can be an optical fiber cable or the like.

It has been found experimentally that the use of a lubricating material disclosed herein is suitable for providing a considerable reduction of the coefficient of friction of the cable, which means that it is easier to install without adding any external element to it, which is one of the objectives sought in the present invention.

### EXAMPLE

To understand the affects of the jacket lubricant system on the ease of pull variations of the UL (Underwriters Laboratories, Inc.) joist pull test was utilized.

The joist pull test outlined in UL 719 Section 23 establishes the integrity of the outer PVC jacket of Type NM-B constructions when subjected to pulling through angled holes drilled through wood blocks.

The test apparatus consists of an arrangement of 2"x4" wood blocks having holes drilled at 15° drilled through the broad face. Four of these blocks are then secured into an frame so that the centerlines of the holes are offset 10" to create tension in the specimen through the blocks. A coil of NM-B is placed into a cold-box and is conditioned at -20°C for 24 hours. A section of the cable is fed through corresponding holes in the blocks where the end protruding out of the last block is pulled through at 45° to the horizontal. The cable is then cut off and two other specimens are pulled through from the coil in the cold-box. Specimens that do not exhibit torn or broken jackets and maintain conductor spacing as set fort in the Standard are said to comply.

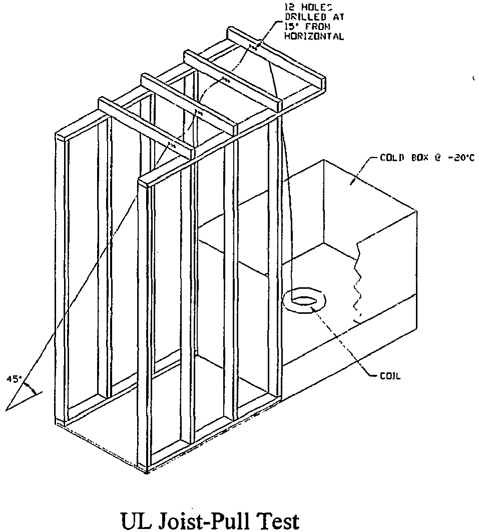

Pulling wire through the wood blocks provides a more direct correlation of the amount of force required to pull NM-B in during installation. Because of this relationship, the joist-pull test is initially the basis for which ease of pulling is measured, but a test for quantifying this "ease" into quantifiable data had to be established.

A variable-speed device was introduced to pull the cable specimen through the blocks. An electro-mechanical scale was installed between the specimen and the pulling device to provide a readout of the amount of force in the specimen. To create back tension a mass of known weight (5-lbs) was tied to the end of the specimen.

Data recorded proved that NM-B constructions having surface lubricates reduced pulling forces.

A 12-V constant speed winch having a steel cable and turning sheave was employed; the turning sheave maintains a 45 degree pulling angle and provides a half-speed to slow the rate of the pulling so that more data points could be obtained. Holes were drilled in rafters whereby specimens could be pulled by the winch.

It was found using this method that lubricated specimens yielded approximately a 50% reduction in pulling force when compared to standard, non-lubricated NM-B specimens. The results are shown in Tables 1 and 2 wherein the data was recorded at five second intervals.

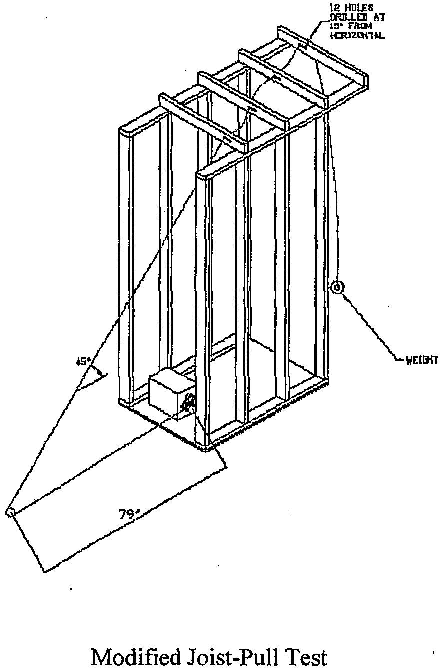

**TABLE 1**

| Test Pt. Descr. | Specimen Description | | | | | | | | |
|---|---|---|---|---|---|---|---|---|---|
| | Manufacturer A1 | Manufacturer A2 | Manufacturer A3 | Manufacturer B1 | Manufacturer B2 | Manufacturer B3 | Control 1 | Control 2 | Present Invention |
| 1st Point | 26.8 | 48.3 | | 37.8 | 37.4 | | 16.5 | 41.9 | 24 |
| 2nd Point | 34.6 | 51.1 | | 35.2 | 38.1 | | 41.6 | 42 | 20.5 |
| 3rd Point | 33.7 | 46.8 | | 32 | 33 | | 40.2 | 38.7 | 20 |
| 4th Point | 38.6 | 49.8 | | 34.7 | 34.6 | | 41.3 | 29.5 | 17.4 |
| 5th Point | 33.1 | 44.8 | | 34.2 | 32.5 | | 41.3 | 34.3 | 20.2 |
| 6th Point | 28.6 | 44.7 | | 32.2 | 33.2 | | 42.5 | 35.9 | 15.8 |
| 7th Point | 5.5 | 51 | | 32.2 | 33.9 | | 41.1 | 37 | 17.2 |
| 8th Point | 26.8 | 49.2 | | 33.9 | 33 | | 40.9 | 38.4 | 17.3 |
| 9th Point | 21.9 | 52.5 | | 32.6 | 30.6 | | 42.7 | 37.3 | 21.9 |
| Average | 30.51 | 48.69 | | 33.87 | 34.03 | | 41.45 | 37.22 | 19.37 |

| | | | | | | | | | |
|---|---|---|---|---|---|---|---|---|---|
| AAA - Denotes Outlyers Test in Table 1 performed at a constant speed with winch using 1/2 speed pulley Test in Table 2 performed on cable with a 5# weight suspended at building entry | | | | | | | | | |

| Std. Prod. Average | Present Invention |
|---|---|
| 37.6289 | 19.37 |

**TABLE 2**

| Test Pt. Descr. | Specimen Description | | | | | | |
|---|---|---|---|---|---|---|---|
| | Manufacturer A 14-2 | Manufacturer B 14-2 | Control 1 14-2/12-2 | Control 2 14-2/12-2 | Control 3 14-2/12-2 | Invention A 14-2/12-2 | Invention B 14-2/12-2 |
| 1 st Point | 34 | 32.6 | 50 | 47.5 | 40.2 | 21.5 | 12.3 |
| 2nd Point | 35 | 35.7 | 50.6 | 38.3 | 37.5 | 22.9 | 12.8 |
| 3rd Point | 35.5 | 31.2 | 46.7 | 43.2 | 27.5 | 29 | 12.1 |
| 4th Point | 37.7 | 35 | 44.5 | 46 | 36.8 | 22.4 | 14.9 |
| 5th Point | 40.5 | 30.6 | 46.2 | 39.5 | 36 | 23.3 | 11.9 |
| 6th Point | 32.9 | 28.8 | 40.9 | 35.7 | 41.2 | 21.1 | 12.5 |
| 7th Point | 44.2 | 32.4 | 52.8 | 37.5 | 37 | 21.6 | 11.7 |
| 8th Point | 43 | 32.4 | 40.7 | 27.7 | 31.7 | 22.5 | 11.7 |
| 9th Point | 43.4 | 30.5 | 40 | 31.1 | | 19.2 | 11 |
| 10th Point | 40 | | | | | | 11.6 |
| Average | 38.62 | 32.13 | 45.82 | 38.50 | 35.99 | 22.61 | 12.25 |
| 14-2/12-2 | | | 14-2/12-2 | | 14-2/12-2 | | |
| Control Avg. | | | Invention A | | Invention B | | |
| 40.103241 | | | 22.61 | | 12.25 | | |

## Claims

1. The use of an electrical cable (12) having a cable core (14) and an external jacket with an exterior surface defining the outermost exterior surface of the cable (12) wherein the external jacket of the cable (12) is formed of extruded plastic material (17) **characterized in that**:
the electrical cable (12) is utilised in installation through wall or ceiling cavities conduits or ducts;
the cable core (14) is comprised of an electrical conductor;
the jacket incorporates lubricating material (19) that blooms, migrates toward the exterior surface of or permeates the jacket, the jacket being formed by incorporating lubricating material into the jacket during or prior to the extruding; and
the jacket contains sufficient lubricating material (19) to provide a reduced coefficient of friction of the exterior surface of said external jacket sufficient to reduce an amount of force required to pull the cable (12) through said wall or ceiling cavities conduits or ducts during its installation.

2. The use of claim 1, in which the introduction of said lubricating material (19) is into said plastic material (17) and is effected by combining said lubricating material (19) with said plastic material (17) in non-pellet form, thereby to form sufficiently lubricated material pellets, and the so-lubricated material pellets are thereafter used for said extruding.

3. The use of claim 1, in which said introduction is effected by introducing said plastic material (17) in nonlubricated form into an extruding head (15) at a first location and introducing the said selected lubricating material (19) into said extruding head (15) at a second location after said first location, while extruding said jacket through said extruding head.

4. The use of claim 1, in which said introduction is effected by combining said lubricating material (19) with pellets of said plastic material (17), and extruding the jacket with use of the so-lubricated material pellets.

5. The use of any of claims 1 to 5, in which the cable core (14) includes at least one electrical conductor.

6. The use of any preceding claim, in which the reduction of the required force for installation is at least approximately 50% of the force required to install non-lubricated cable of the same cable type.

7. The use of any preceding claim, in which the installation is through the internal section of a wall or ceiling.

8. The use of any preceding claim, in which the installation is through a conduit.

9. The use of any preceding claim, in which the installation is through a duct.

10. The use of any preceding claim, in which said lubricating material (19) is selected from the group consisting of fatty amides, hydrocarbon oils, plasticizers, silicone oils and mixtures thereof.

11. The use of claim 10, in which said lubricating material (19) is comprised of a fatty amide.

12. The use of claim 11, in which said lubricating material (19) is comprised of oleamide.

13. The use of any of claims 1 to 9, in which said lubricanting material (19) comprises one of the following: fatty esters; fatty amides, fatty acids, fatty esters, and metallic fatty acids having from about 10 to about 28 carbon atoms; and capric acid, lauric acid, myristic acid, palmitic acid, palmitoleic acid, stearic acid, oleic acid, vaccenic acid, linoleic acid, linolenic acid, eleostearic acid, arachidic acid, arachidonic acid, behenic acid, lignoceric acid, nervonic acid, cerotic acid, montanic acid, caprate, laurate, myristate, palmitate, palmitoleate, stearate, oleate, vaccinate, linoleate, linolenate, eleostearate, arachidate, arachidonate, behenate, lignocerate, nervonate, cerotate, montanate, pentaerythritol monopalmitate, pentaerythritol monostearate, pentaerythritol dipalmitate, pentaerythritol palmitate stearate, pentaerythritol distearate.

14. The use of any preceding claim, in which the plastic material (17) forming the external jacket comprises one of the following materials: polyethylene, polypropylene, polyvinylchloride, organic polymeric thermosetting and thermoplastic resins and elastomers, polyolefins, copolymers, vinyls, olefin-vinyl copolymers, polyamides, acrylics, polyesters, and fluorocarbons.

## Patentansprüche

1. Verwendung eines elektrischen Kabels (12) mit einem Kabelkern (14) und einer äußeren Umhüllung mit einer Außenoberfläche, die die äußerste Außenoberfläche des Kabels (12) definiert, wobei die äußere Umhüllung des Kabels (12) aus extrudiertem Kunststoffmaterial (17) ausgebildet ist, **dadurch gekennzeichnet, dass**:
das elektrische Kabel (12) bei einer Installation durch Wand- oder Decken-Hohlräume, -Rohre oder -Kanäle benutzt wird;
der Kabelkern (14) einen elektrischen Leiter aufweist;
die Umhüllung ein gleitfähig machendes Material (19) beinhaltet, das ausblüht, in Richtung der Außenoberfläche der Umhüllung wandert oder die Umhüllung durchdringt, wobei die Umhüllung ausgebildet wird durch Aufnehmen von gleitfähig machendem Material in die Umhüllung während des Extrudierens oder vor dem Extrudieren;
die Umhüllung ausreichend gleitfähig machendes Material (19) enthält, um für einen verringerten Reibungskoeffizienten der Außenoberfläche der äußeren Umhüllung zu sorgen, der ausreicht, um die Menge an Kraft, die erforderlich ist, um das Kabel (12) während seiner Installation durch die Wand- oder Decken-Hohlräume, -Rohre oder -Kanäle zu ziehen, zu verringern.

2. Verwendung nach Anspruch 1, wobei das Einbringen des gleitfähig machenden Materials (19) in das Kunststoffmaterial (17) erfolgt und bewirkt wird durch Vereinigen des gleitfähig machenden Materials (19) mit dem Kunststoffmaterial (17) in nicht-Pelletform, um dadurch ausreichend gleitfähig gemachte Materialpellets zu bilden, und wobei die so gleitfähig gemachten Materialpellets danach für das Extrudieren verwendet werden.

3. Verwendung nach Anspruch 1, wobei das Einbringen bewirkt wird durch Einbringen des Kunststoffmaterials (17) in nicht-gleitfähig gemachter Form in einen Extrudierkopf (15) an einer ersten Stelle, und Einbringen des ausgewählten gleitfähig machenden Materials (19) in den Extrudierkopf (15) an einer zweiten Stelle nach der ersten Stelle, während die Umhüllung durch den Extrudierkopf extrudiert wird.

4. Verwendung nach Anspruch 1, wobei das Einbringen bewirkt wird durch Vereinigen des gleitfähig machenden Materials (19) mit Pellets des Kunststoffmaterials (17), und Extrudieren der Umhüllung unter Verwendung der so gleitfähig gemachten Materialpellets.

5. Verwendung nach einem der Ansprüche 1 bis 5, wobei der Kabelkern (14) mindestens einen elektrischen Leiter aufweist.

6. Verwendung nach einem vorangehenden Anspruch, wobei die Verringerung der zur Installation erforderlichen Kraft mindestens näherungsweise 50% der Kraft beträgt, die erforderlich ist, um ein nicht-gleitfähig gemachtes Kabel desselben Kabeltyps zu installieren.

7. Verwendung nach einem vorangehenden Anspruch, wobei die Installation durch den Innenbereich einer Wand oder einer Decke erfolgt.

8. Verwendung nach einem vorangehenden Anspruch, wobei die Installation durch ein Rohr erfolgt.

9. Verwendung nach einem vorangehenden Anspruch, wobei die Installation durch einen Kanal erfolgt.

10. Verwendung nach einem vorangehenden Anspruch, wobei das gleitfähig machende Material (19) ausgewählt wird aus der Gruppe, die aus Fettamiden, Kohlenwasserstoffölen, Weichmachern, Silikonölen und Gemischen davon besteht.

11. Verwendung nach Anspruch 10, wobei das gleitfähig machende Material (19) ein Fettamid aufweist.

12. Verwendung nach Anspruch 11, wobei das gleitfähig machende Material (19) Oleamid aufweist.

13. Verwendung nach einem der Ansprüche 1 bis 9, wobei das gleitfähig machende Material (19) eines der folgenden Materialien aufweist:
Fettester; Fettamide, Fettsäuren, Fettester, und Metallsalze von Fettsäuren mit von etwa 10 bis etwa 28 Kohlenstoffatomen; und Caprinsäure, Laurinsäure, Myristinsäure, Palmitinsäure, Palmitoleinsäure, Stearinsäure, Oleinsäure, Vaccensäure, Linolsäure, Linolensäure, Elaeostearinsäure, Arachinsäure, Arachidonsäure, Behensäure, Lignocerinsäure, Nervonsäure, Cerotinsäure, Montansäure, Caprinat, Laurat, Myristat, Palmitat, Palmitoleat, Stearat, Oleat, Vaccenat, Linoleat, Linolenat, Elaeostearat, Arachinat, Arachidonat, Behenat, Lignocerat, Nervonat, Cerotat, Montanat, Pentaerythritol-monopalmitat, Pentaerythritol-monostearat, Pentaerythritol-dipalmitat, Pentaerythritol-palmitatstearat, Pentaerythritol-distearat.

14. Verwendung nach einem vorangehenden Anspruch, wobei das Kunststoffmaterial (17), das die äußere Umhüllung bildet, eines der folgenden Materialien aufweist: Polyethylen, Polypropylen, Polyvinylchlorid, organische polymere wärmehärtende und thermoplastische Harze und Elastomere, Polyolefine, Copolymere, Vinyle, Olefin-Vinyl-Copolymere, Polyamide, Acrylharzderivate, Polyester und Fluorkohlenstoffe.

## Revendications

1. Utilisation d'un câble électrique (12) ayant une âme de câble (14) et une gaine externe avec une surface extérieure définissant la surface la plus à l'extérieur du câble (12), dans laquelle la gaine externe du câble (12) est formée de matière plastique extrudée (17), **caractérisée en ce que** :
le câble électrique (12) est utilisé dans une installation à travers des cavités de mur ou de plafond, des conduits ou des canalisations ;
l'âme de câble (14) est constituée d'un conducteur électrique ;
la gaine incorpore une matière lubrifiante (19) qui progresse par efflorescence, migre vers la surface extérieure de la gaine ou s'infiltre dans celle-ci, la gaine étant formée en incorporant la matière lubrifiante dans la gaine pendant ou avant l'extrusion ; et
la gaine contient de la matière lubrifiante (19) suffisante pour donner un coefficient de frottement réduit de la surface extérieure de ladite gaine externe suffisant pour réduire une quantité de force requise pour tirer le câble (12) à travers lesdites cavités de mur ou de plafond, lesdits conduits ou lesdites canalisations pendant son installation.

2. Utilisation selon la revendication 1, dans laquelle l'introduction de ladite matière lubrifiante (19) est dans ladite matière plastique (17) et est réalisée en combinant ladite matière lubrifiante (19) avec ladite matière plastique (17) sous forme non granulée, pour ainsi former des granulés de matière suffisamment lubrifiée, et les granulés de matière ainsi lubrifiée sont ensuite utilisés pour ladite extrusion.

3. Utilisation selon la revendication 1, dans laquelle ladite introduction est réalisée en introduisant ladite matière plastique (17) sous forme non lubrifiée dans une tête d'extrusion (15) à un premier emplacement et en introduisant ladite matière lubrifiante sélectionnée (19) dans ladite tête d'extrusion (15) à un second emplacement après ledit premier emplacement, tout en extrudant ladite gaine à travers ladite tête d'extrusion.

4. Utilisation selon la revendication 1, dans laquelle ladite introduction est réalisée en combinant ladite matière lubrifiante (19) avec des granulés de ladite matière plastique (17), et en extrudant la gaine en utilisant les granulés de matière ainsi lubrifiée.

5. Utilisation selon l'une quelconque des revendications 1 à 5, dans laquelle l'âme de câble (14) inclut au moins un conducteur électrique.

6. Utilisation selon l'une quelconque des revendications précédentes, dans laquelle la réduction de la force requise pour l'installation est d'au moins approximativement 50 % de la force requise pour installer un câble non lubrifié du même type de câble.

7. Utilisation selon l'une quelconque des revendications précédentes, dans laquelle l'installation est à travers la section interne d'un mur ou d'un plafond.

8. Utilisation selon l'une quelconque des revendications précédentes, dans laquelle l'installation est à travers un conduit.

9. Utilisation selon l'une quelconque des revendications précédentes, dans laquelle l'installation s'effectue à travers une canalisation.

10. Utilisation selon l'une quelconque des revendications précédentes, dans laquelle ladite matière lubrifiante (19) est sélectionnée parmi le groupe constitué d'amides gras, d'huiles hydrocarbures, de plastifiants, d'huiles silicone et de mélanges de ceux-ci.

11. Utilisation selon la revendication 10, dans laquelle ladite matière lubrifiante (19) est constituée d'un amide gras.

12. Utilisation selon la revendication 11, dans laquelle ladite matière lubrifiante (19) est constituée d'oléamide.

13. Utilisation selon l'une quelconque des revendications 1 à 9, dans laquelle ladite matière lubrifiante (19) comprend l'une des matières suivantes : esters gras ; amides gras, acides gras, esters gras et acides gras métalliques ayant d'environ 10 à environ 28 atomes de carbone ; et acide caprique, acide laurique, acide myristique, acide palmitique, acide palmitoléique, acide stéarique, acide oléique, acide vaccénique, acide linoléique, acide linolénique, acide éléostéarique, acide arachidique, acide arachidonique, acide béhénique, acide lignocérique, acide nervonique, acide cérotique, acide montanique, caprate, laurate, myristate, palmitate, palmitoléate, stéarate, oléate, vaccinate, linoléate, linolénate, éléostéarate, arachidate, arachidonate, béhénate, lignocérate, nervonate, cérotate, montanate, pentaérythritol monopalmitate, pentaérythritol monostéarate, pentaérythritol dipalmitate, pentaérythritol palmitate stéarate, pentaérythritol distéarate.

14. Utilisation selon l'une quelconque des revendications précédentes, dans laquelle la matière plastique (17) formant la gaine externe comprend l'une des matières suivantes : polyéthylène, polypropylène, polychlorure de vinyle, résines et élastomères polymères organiques thermodurcissables et thermoplastiques, polyoléfines, copolymères, vinyles, copolymères d'oléfinevinyle, polyamides, acryliques, polyesters et fluorocarbones.
